# EUROPEAN PATENT SPECIFICATION

(11) **EP 2 044 836 B1**
(45) Date of publication and mention of the grant of the patent: **08.06.2011**
(21) Application number: 08165679.5
(22) Date of filing: 02.10.2008
(51) Int. Cl.: A01J 27/02, A22C 13/00, A23C 19/16, A23L 1/00, C08F 218/04, C09D 131/00

(54) **Method for coating a cheese**
Beschichtungsverfahren für Käse
Procédé pour le revêtement d'un fromage

(30) Priority: 05.10.2007 EP 07117981
(43) Date of publication of application: 08.04.2009
(73) Proprietor: CSK Food Enrichment B.V., 8938 AS Leeuwarden (NL)
(72) Inventor: Koopmans, Wieger Jan, 8911 ET, Leeuwarden (NL); Delnoye, Didier André Pierre, 9721 RW, Groningen (NL); Meijer, Willem Cornelis, 6712 HA, Ede (NL); Kevelam, Jan, 6718 HR, Ede (NL)
(74) Representative: Swinkels, Bart Willem

(56) References cited:
- EP-A- 1 537 786
- EP-A- 1 609 367
- WO-A-2007/116020
- GB-A- 544 253

## Description

### Field of the invention

The present invention relates to a method for coating a cheese. The present invention also relates to a coating composition and the use thereof.

### Background of the invention

The use of a polymer emulsion for coating cheese, in particular semi-hard and hard cheese, is known. The treatment of a cheese with the polymer emulsion and subsequent drying of the polymer emulsion generates a protective film which *inter alia* prevents mould formation on the cheese and counteracts excessively rapid drying of the cheese during ripening. Typically, cheese, in particular semi-hard and hard cheese, receives several treatments during ripening with a polymer emulsion, usually with intermittent drying, until the cheese has reached the desired degree of ripening. Then, after that the last layer of the polymer emulsion is applied and has dried, a paraffin-based wax finish is applied from a melt onto the cheese. Thereafter, the cheese is ready for long-time storage and transportation without further ripening to occur and without further water to evaporate from the cheese and/or further moulding to occur.

Upon consumption, cheese is usually cut into pieces or is sliced. For reasons of process hygiene, the cutting or slicing process is usually performed at low temperatures, typically, the temperature of the cheese during cutting is between 4° to 15°C. During cutting or slicing, it is important that the dried coating does not detach from the cheese, breaks into pieces or cracks. It is also important and preferred that the cheese itself does not deform, breaks or cracks under the cutting or slicing forces.

The polymer emulsion used for coating cheese is usually based on polymers of vinyl acetate. The Mowilith-Handbuch [Mowilith manual] from Hoechst AG (4th Edition, 1969, chapter 6.8, pp. 201 ff.) already discloses the use of the poly(vinyl acetate) emulsion Mowilith® D which has a solids content of approximately 50% (w/w). However, the film coating formed from this emulsion is excessively brittle and, as a consequence, this emulsion is in practice of little use. Nonetheless, external plasticizers, e.g. dibutyl phthalate, may be added to improve the properties of the film coating, although such external plasticizers may be problemat ic, for example under food regulations.

DE 1 236 310 discloses cheese coating emulsions comprising poly(vinyl acetate) in which 10 to 50% by weight of poly(vinyl propionate) is used as a soft polymer as a replacement for external plasticizers. These emulsions of polymer blends have likewise not established themselves on the market.

Nowadays, plasticizer-free emulsions of poly(vinyl ester) copolymers, in particular plasticizer-free emulsions of poly(vinyl acetate), particularly of poly(vinyl acetate-co-dibutyl maleate), are widely used for coating cheese. The Mowilith-Handbuch [Mowilith manual] from Hoechst AG (4^{th} edition, 1969, chapter 6.8, pp. 201 ff.) discloses a plasticizer-free poly(vinyl acetate-*co*-dibutyl maleate) emulsion for use as a cheese coating, i.e. Mowilith® DM2 KL, having a solids content of approximately 45% (w/w). Herein, the "soft" monomer dibutyl maleate acts as an internal plasticizer for the "hard" monomer vinyl acetate. Emulsions of copolymers based on vinyl esters (in particular vinyl acetate) and maleates, fumarates, acrylates or alpha -olefins, and their use for coating a cheese, are for example disclosed in EP 1458774, EP 1642929 and EP 1469017. Other polymer emulsions are based on (meth)acrylic homo- and copolymers, cf. for example EP 1609367.

Current polymer emulsions for coating cheese are nevertheless associated with a number of disadvantages. In particular, it has not been possible to provide a polymer emulsion which - after drying - has good overall film properties under a wide range of ripening and storage conditions. Several attempts have, however, been made to improve the overall film properties formed from a plastics emulsion.

NL 1004792 discloses a cheese coating composition comprising a filler, preferably an inert filler, e.g. an alkali carbonate or silicate. It is disclosed that the solid matter content of the cheese coating composition is preferably increased by the addition of the filler, thereby reducing the drying time of the cheese coating composition. Furthermore, NL 1004792 discloses that 12 kg Gouda cheeses did not stick to each other when piled after having been treated with a coating composition comprising 50 parts by weight of a cheese coating type Ceska, 35 parts by weight of chalk (powder) and 15 parts by weight of water, the coating composition being applied to the cheeses within 24 h before piling. In addition, it is disclosed that these cheeses did not stick to a cheese board.

However, the present inventors noted that cheese coating compositions of the type Ceska comprise a poly(vinyl alcohol)-stabilised polymer emulsion of vinyl acetate and dibutyl maleate which, when applied to a cheese, forms a film after drying. The present inventors further noted that the filler affects one or more properties of the cheese coating composition *per se,* and/or one or more properties of the film formed from the cheese coating composition. For example, the filler affects the storage stability of the cheese coating composition, processing and application of the coating.

Consequently, there is still a need in the art for improved cheese coating compositions which do not have the drawbacks of the cheese coating compositions known from the prior art.

### Summary of the invention

The present invention relates to a method for coating a cheese according to claim 1 and according to the thereof depending claims.

### Detailed description of the invention

### Definitions

In this document, unless otherwise indicated, a coated cheese described herein has not received a (further) treatment with a paraffin-based wax finish, which is applied from a melt.

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The chain length of a residue connected to a functional group, expressed as a number of carbon atoms, is specified with regard to the number of carbon atoms comprised by the residue, excluding the number of carbon atoms comprised by the functional group. Thus, for example, a C₁ monocarboxylic acid comprises two carbon atoms, of which one carbon atom is comprised by the carboxyl functional group and one carbon atom is comprised by the residue; in this example the C₁ monocarboxylic acid thus relates to acetic acid. In another example, a C₁ alkanol comprises one carbon atom, i.e. the carbon atom comprised by the C₁ residue which is connected to the hydroxyl functional group. The expression "a C₂ monoethylenically unsaturated dicarboxylic acid" may preferably represent fumaric acid or maleic acid (*i.e.* two carboxylic groups connected via a unsatured C₂ (ethylenic) moiety).

### The coating composition

It is preferred that polymer A and/or polymer B are obtainable by emulsion polymerization. It is further preferred that polymer A and polymer B are obtainable by emulsion polymerization. In particular, it is preferred that polymer A and polymer B are obtainable by polymerization of a monomer or a monomer mixture, wherein the monomer is selected from the group consisting of a vinylic ester of an aliphatic saturated monocarboxylic acid having a chain length of C₁-C₁₈, a diester of an alkanol having a chain length of C₁-C₁₈ and a monoethylenically unsaturated C₂-C₁₂ dicarboxylic acid, an acrylic ester of an alkanol having a chain length of C₁-C₁₈, a methacrylic ester of an alkanol having a chain length of C₁-C₁₈, and an alpha-olefin having a chain length of C₂-C₁₈. Herein, a preferred alpha-olefin is ethylene. The vinylic ester of an aliphatic saturated monocarboxylic acid having a chain length of C₁-C₁₈ is preferably selected as vinyl acetate or vinyl propionate, or a mixture thereof.

Polymer A is preferably obtainable by polymerization of a monomer mixture comprising (1) a vinylic ester of an aliphatic saturated monocarboxylic acid having a chain length of C₁-C₁₈ and a diester of an alkanol having a chain length of C₁-C₁₈ and a monoethylenically unsaturated C₂-C₁₂ dicarboxylic acid, (2) a vinylic ester of an aliphatic saturated monocarboxylic acid having a chain length of C₁-C₁₈ and an alpha-olefin having a chain length of C₂-C₁₈, or (3) a vinylic ester of an aliphatic saturated monocarboxylic acid having a chain length of C₁-C₁₈ and an acrylic ester of an alkanol having a chain length of C₁-C₁₈, wherein the monomer mixture comprises said monomers in a total amount of at least 80 wt.%, more preferably of at least 90 wt.% with respect to the weight of the monomer mixture.

Polymer A is most preferably obtainable by polymerization of a monomer mixture comprising (1) vinyl acetate and dibutylmaleate, (2) vinyl acetate and ethylene), or (3) vinyl acetate and n-butylacrylate, wherein the monomer mixture comprises said two different monomers in a total amount of at least 80 wt.%, more preferably of at least 90 wt.% with respect to the weight of the monomer mixture.

Preferably, the monounsaturated C₂-C₁₂ dicarboxylic acid is maleic acid or fumaric acid, or a mixture thereof.

Also preferably, the monomer mixture comprises or further comprises a monoethylenically unsaturated C₂-C₁₂ mono- or dicarboxylic acid or a salt thereof, or a mixture thereof. The mono-ethylenically unsaturated C₂-C₁₂ mono- or dicarboxylic acid is preferably selected from the group consisting of acrylic acid, methacrylic acid, itaconic acid, fumaric acid, maleic acid, a maleic mono-ester of an alkanol having a chain length of C₁-C₁₈, and a fumaric mono-ester of an alkanol having a chain length of Ci-Cis.

Polymer A is preferably a copolymer. It is further preferred that polymer A is a copolymer obtainable by polymerization of :
a. 40 to 95 parts by weight, more preferably 50 to 90 parts by weight, even more preferably 50-70 parts by weight of a monomer selected from the group consisting of a vinylic ester of an aliphatic saturated monocarboxylic acid having a chain length of C₁-C₆, an acrylic ester of an alkanol having a chain length of C₁-C₆, and a methacrylic ester of an alkanol having a chain length of C₁-C₆; and
b. 5-60 parts by weight, more preferably 10 to 50 parts by weight, more preferably between 20 and 50 parts by weight, even more preferably between 30 and 50 parts by weight of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid, and itaconic acid.

Herein, it is preferred that the vinylic ester of an aliphatic saturated monocarboxylic acid having a chain length of C₁-C₆ is vinyl acetate. Regarding the monomers under (a.), the (meth)acrylic ester of an alkanol having a chain length of C₁-C₁₈ is preferably selected as methyl (meth)acrylate. Regarding the monomers under (b.), it is preferred that the alkanol having a chain length of C₁-C₁₈ is preferably selected as propanol, butanol, pentanol, hexanol or octanol, or as a mixture thereof, and is most preferably selected as (*n*-)butanol. The alpha-olefin is preferably selected as ethylene or as octene or as a mixture thereof. The acrylic ester of an alkanol having a chain length of C₁-C₁₈ is preferably selected as (*n*-)butyl acrylate. The diester of an alkanol having a chain length of C₁-C₁₈ and a monoethylenically unsaturated C₂-C₁₂ dicarboxylic acid is preferably selected as dibutylmaleate or dibutylfumarate, or as a mixture thereof.

In a preferred embodiment, A is a polymer obtainable by polymerisation of a monomer mixture comprising vinyl acetate and dibutyl maleate. It is preferred that the monomer mixture comprises vinyl acetate and dibutyl maleate in a total amount of at least 80 wt.%, more preferably in an amount of at least 90 wt.%, most preferably in an amount of at least. 95% wt.% with respect to the weight of the monomer mixture. Preferably, the weight ratio of vinyl acetate to dibutyl maleate in the monomer mixture ranges between 70:30 - 50:50. In an especially preferred embodiment, A is a copolymer obtainable by polymerization of:
a. 50 to 70 parts by weight of vinyl acetate, and
b. 30 to 50 parts by weight of dibutylmaleate.

In another preferred embodiment, A is a polymer obtainable by polymerization of a monomer mixture comprising vinyl acetate and ethylene. It is comprised that the monomer mixture comprises vinyl acetate and ethylene in a total amount of at least 80 wt.%, more preferably in an amount of at least 90 wt.%, most preferably in an amount of at least. 95% wt.% with respect to the weight of the monomer mixture. Most preferably, the monomer mixture consists of vinyl acetate and ethylene. Preferably, the weight ratio of vinyl acetate to ethylene in the monomer mixture ranges between 97:3 - 70:30, more preferably between 95:5 and 80:20.

In yet another preferred embodiment, A is a polymer obtainable by polymerization of a monomer mixture comprising vinyl acetate and butylacrylate. It is comprised that the monomer mixture comprises vinyl acetate and butylacrylate in a total amount of at least 80 wt.%, more preferably in an amount of at least 90 wt.%, most preferably in an amount of at least. 95% wt.% with respect to the weight of the monomer mixture. Most preferably, the monomer mixture consists of vinyl acetate and butyl acrylate. Preferably, the weight ratio of vinyl acetate to n-butylacrylate in the monomer mixture ranges between 90:10 - 50:50. According to the present invention, polymers A and B are preferably of food-grade quality and - except for any polymer comprising ethylene - are suitably produced under conditions of atmospheric pressure.

According to the present invention, polymer B is preferably obtainable by polymerization of a monomer or a monomer mixture, wherein the monomer is selected from the group consisting of a vinylic ester of an aliphatic saturated monocarboxylic acid having a chain length of C₁-C₆, an acrylic ester of an alkanol having a chain length of C₁-C₆, a methacrylic ester of an alkanol having a chain length of C₁-C₆, a monoethylenically unsaturated C₂-C₁₂ monocarboxylic acid or a salt thereof, and a monoethylenically unsaturated C₂-C₁₂ dicarboxylic acid or a salt thereof. Herein, the vinylic ester of an aliphatic saturated monocarboxylic acid having a chain length of C₁-C₆ is preferably selected as vinyl acetate. The (meth)acrylic ester of an alkanol having a chain length of C₁-C₆ is preferably selected as methyl (meth)acrylate.

In a preferred embodiment, polymer B is a homopolymer. It is further preferred that polymer B is obtainable by polymerization of a vinylic ester of an aliphatic saturated monocarboxylic acid having a chain length of C₁-C₆, of an acrylic ester of an alkanol having a chain length of C₁-C₆, or of a methacrylic ester of an alkanol having a chain length of C₁-C₆. In a preferred embodiment, the vinylic ester of an aliphatic saturated monocarboxylic acid having a chain length of C₁-C₆ is vinyl acetate. The (meth)acrylic ester of the alkanol having a chain length of C₁-C₆ is preferably selected as methyl (meth)acrylate.

It is preferred that both polymer A and polymer B comprise a vinylic ester of an aliphatic saturated monocarboxylic acid having a chain length of C₁-C₆. Accordingly, polymer B is optimally compatible with a polymer A.

Advantageously, polymer A and/or polymer B are prepared in the presence of 0.1-3 parts by weight, preferably 0.1 to 1 parts by weight, based on the total weight of the monomer or monomer mixture, of an emulsifier, preferably a nonionic and/or an anionic emulsifier.

Additionally or alternatively, but preferably additionally, it is preferred that polymer A and/or polymer B are prepared in the presence of 1-12 parts by weight, preferably 3 to 8 parts by weight, based on the total weight of the monomer or monomer mixture, of a protective colloid. Preferably, the protective colloid is selected from the group consisting of a poly(vinyl alcohol), a poly(vinyl pyrrolidone), and a cellulose ether and most preferably the protective colloid is a poly(vinyl alcohol).

In preferred embodiment, both polymer A and polymer B are obtainable by emulsion polymerisation in the presence of a protective colloid, preferably poly(vinyl alcohol). Accordingly, a coating composition of suitably high viscosity is obtained without the need to incorporate thickening agents.

In a further preferred embodiment, polymer A is a copolymer obtainable by emulsion polymerization, in the presence of poly(vinyl alcohol), and polymer B is a homopolymer obtainable by emulsion polymerisation, in the presence of poly(vinyl alcohol). According to this further preferred embodiment, as an example, polymer A may be obtained as Mowilith SDM 4230 (Celanese Emulsions, Frankfurt, Germany) and polymer B may be obtained as Mowilith DN50 (Celanese Emulsions, Frankfurt, Germany). Advantageously, the composition according to this embodiment provides for good storage stability; in addition, a dried coating obtained from said mixture has particularly favourable mechanical properties under conditions which are relevant for the production and/or processing of cheese.

In another preferred embodiment, polymer A is obtainable by emulsion polymerisation in the presence of poly(vinyl alcohol), and polymer B is obtainable by emulsion polymerisation in the presence of an emulsifier and in the absence of a protective colloid. Accordingly, a coating composition is provided which still has sufficient viscosity - albeit at a higher solid matter content - in addition to favourable storage stability. Moreover, a dried film formed from said composition has comparable mechanical properties whilst providing an improved gloss, as compared with a composition wherein both polymer A and polymer B are obtainable by emulsion polymerisation in the presence of a protective colloid. A particularly preferred polymer B according to this embodiment is Mowilith DV50, or another poly(vinyl acetate) homopolymer obtainable by emulsion polymerisation in the presence of a nonionic and/or an anionic emulsifier. According to this embodiment, it is further preferred that polymer A is a copolymer obtainable by emulsion polymerization, in the presence of poly(vinyl alcohol).

According to the invention, it is preferred that the coating composition is an aqueous coating composition. A preferred coating composition comprises (i) 25-50% (w/w) of polymer A and polymer B; (ii) 0-5% (w/w) of an additive, based on dry matter; and (iii) water to 100% (w/w). A preferred coating composition comprises (i) 25-60% (w/w) of polymer A and polymer B with respect to the total weight of the composition; (ii) 0-10% (w/w) of an additive with respect to the total weight of the composition and (iii) water to 100% (w/w). More preferably, the coating composition comprises 35 to 45 % (w/w) of polymer A and polymer B, based on the total weight of the composition and 0 to 2.5 % (w/w) of an additive, based on dry matter. It is most preferred that the coating composition comprises (i) 30-50% (w/w) of polymer A and polymer B with respect to the total weight of the composition; (ii) 0-5% (w/w) of an additive with respect to the total weight of the composition and (iii) water to 100% (w/w). Accordingly, when applied using conventional automatic coating devices for cheese, the coating composition allows for protection of the cheese with a sufficiently thick layer whilst the drying time of the coating layer on the cheese is still acceptable. It is preferred that the weight ratio of polymer A to polymer B is 70 : 30 to 98 : 2, more preferably 75 : 25 to 95 : 5.

The additive may be an additive composition, said additive being preferably selected from the group consisting of an acid, a lye, a buffer salt, a colorant, an antioxidant, a thickener, a preservative, a hydroxylic solvent (preferably mono propylene glycol), a fungicide (preferably natamycin), and mixtures thereof

The coating composition has preferably a Brookfield viscosity of 1000-15000 mPa.s, wherein the Brookfield viscosity is determined according to a method based on ISO 2555. In this method, the viscosity of the coating composition is measured at 23°C using a Brookfield viscometer type LVDV-E operated at speed 30 rpm using spindle number 4. The viscosity meter is levelled and the spindle is attached to the apparatus. The spindle is then immersed into the sample up to the mark on the spindle. The measurement is started and the result is taken at steady state or after one minute.

Most preferably, the Brookfield viscosity of the coating composition thus determined is 2000 to 10000 mPa.s. Preferably, the coating compositions have a Brookfield viscosity which is stable in time.

The coating composition according to the present invention, after drying, provides good film properties under a wide range of ripening, storage and transportation conditions. In particular, it has been found that the polymer B reduces blocking of a film formed from the coating composition, especially at a temperature of 15° to 25 °C. Polymer B reduces in particular blocking of a film, wherein the film is preferably formed from a coating composition comprising 70-98 weight parts of polymer A and 2-30 weight parts of polymer B, even more preferably from a coating composition comprising 70-97 weight parts of polymer A and 3-30 weight parts of polymer B, wherein polymer A is provided by Mowilith SDM 4230 and wherein polymer B is provided by Mowilith DN50 or Mowilith DV50.

In a preferred embodiment, polymer B is a vinyl acetate homopolymer obtainable by emulsion polymerisation in the presence of an emulsifier and in the absence of a protective colloid, and the coating composition comprises polymer A and polymer B in a weight ratio A/B of 98/2 - 90/10. Accordingly, it was found that a film formed by drying the composition had favourable cutting properties, in that brittle fracture during cutting was not observed.

In another preferred embodiment, polymer B is a vinyl acetate homopolymer obtainable by emulsion polymerisation in the presence of a protective colloid, and the coating composition comprises polymer A and polymer B in a weight ratio A/B of 98/2 - 85/15. Accordingly, it was found that a film formed by drying the composition had favourable cutting properties, in that brittle fracture during cutting was not observed.

The coating composition according to the present invention can also be used to coat other food products, in particular sausages.

### The method for coating a cheese

The present invention relates to a method for coating a cheese, wherein a coating composition is applied to a surface of the cheese. It is preferred that subsequently the cheese is dried. This method closely relates to the ripening process of the cheese, which is preferably a semi-hard or hard cheese, as it is passed through a storage period, preferably of several days, more preferably of at least 24-28 days, more preferably of at least several weeks, preferably until 3 months, 6 months, 1 year or 2 years, during which period the cheese receives at regular intervals a treatment with the coating composition. After application of the coating composition, the coating is allowed to dry under conditions which are preferably similar as the conditions (e.g. controlled temperature and relative humidity) which are required for its ripening. Consequently, multiple layers of the coating composition, with intermittent drying of the coating composition on the cheese, may be applied to a surface of the cheese, preferably until the cheese has obtained an age of 24 days, more preferably of at least four weeks, and preferably until 2 years, more preferably until 1 year, even more preferably until 6 months and most preferably until 3 months. According to this embodiment, a layer of the coating composition is preferably applied to the exposed (upper half) surface of the cheese. Then, the emulsion is preferably allowed to dry, preferably for a period of 12h - 2 weeks, more preferably from 24h - 1 week.

The semi-hard or or hard cheese is preferably selected from the group consisting of Gouda, Edam, Maasdam, Leerdam, Emmental, Gruyère, and Parmesan.

During drying, the cheese preferably resides on a wooden cheese board, whilst it is preferably exposed to the ripening conditions mentioned above. The cheese is then turned and another layer of the coating composition is applied to the thus exposed (upper) surface of the cheese. This process of coating, drying and turning is repeated until the cheese has reached its desired age, which is preferably at least 24 days, more preferably at least four weeks, and preferably until 2 years, more preferably until 1 year, even more preferably until 6 months and most preferably until 3 months. Accordingly, a semi-hard or hard cheese may have received 8-12 half-sided treatments with a coating composition.

The method for coating the cheese further preferably comprises drying the applied coating composition at a temperature of 0°-15°C, more preferably between 10°-15°C, and at a relative humidity (RH) of 60-99%, more preferably between 75-95%, most preferably between 80-90%. Ripening at 0°-15°C, preferably at a relative humidity of 80-90%, is referred to as 'cold ripening'.

The method for coating the cheese preferably further comprises drying the applied coating composition at a temperature of 15°-25°C, more preferably 17°-23°C, and at a relative humidity of 60-99%, more preferably 75-95%, most preferably 80-90%. If desired, the ripening process of a cheese can be accelerated, and/or special effects can be achieved during ripening, for example the evolution of CO₂ within a cheese as to promote the formation of holes (or eyes) in the cheese. Ripening at 15°-25°C, preferably at a relative humidity of 80-95%, is referred to as "heated ripening". "Heated ripening" is preferably employed in the production of cheese comprising socalled propioni-bacteria, preferably Maasdam or Emmental.

Preferably, the method according to the invention comprises a period of heated ripening which is applied at the end of a stage of cold ripening, or a period of heated ripening which is applied in between two stages of cold ripening.

The method for coating a cheese may comprise the application of the coating composition to a Maasdam-type cheese, a semi-hard cheese having a typical holey (or eye) structure, wherein this cheese is first ripened for 1-28 days at a temperature of 10°-15°C and at a relative humidity of 80-90%. Then, it is submitted for some time, preferably for 1-14 days, to a temperature of 15°-25°C and a relative humidity of 75-95%, so that CO₂ production within the cheese is stimulated, said conditions being preferably maintained until the desired holey (or eye) structure of the cheese is obtained. Finally and optionally, the cheese is submitted to a temperature of 0°-25°C, more preferably to a temperature of 0°-15°C, in order to prevent further (excessive) production of CO₂ and to maintain the desired holey (or eye) structure of the cheese.

The method according to the invention may also comprise residing of the cheese on a cheese board for 12h-2 weeks, more preferably for 24h-1 week, wherein the surface of the cheese which is in contact with the cheese board has one or more dried layers of the coating composition according to the present invention. The cheese on the cheese board may be exposed to a temperature of 0°-15°C and to a relative humidity of 70-90%. Alternatively, during heated ripening, the cheese on the cheese board may be exposed to a temperature of 15°-25°C and to a relative humidity of 70-90%.

It appears that the surface of the cheese which is in contact with the cheese board may become attached to the cheese board in time. This phenomenon is called "blocking to the board", and may occur both during cold ripening - and/or, usually more severely, during heated ripening. As a result, the removal of the cheese from the cheese board is impaired. Consequently, the coating layer on that side of the cheese which is in contact with the cheese board may be damaged during turning of the cheese. Alternatively, the automatic turning process is impeded and the turning of the cheese has to be manually assisted, which is very labour intensive and, hence, cost intensive. In fact, blocking to the board is a frequently occurring problem in the cheese making industry, which problem is difficult to circumvent without the introduction of other artefacts. Advantageously, the method according to the present invention provides for reduced blocking, both during cold ripening and during heated ripening.

It appears that the present method also provides for reduced blocking of cheeses which are temporally piled on top of each other, for example during transport; herein, the cheeses have received at least one two-sided treatment with the coating composition according to the present invention. Blocking during piling is reduced as compared with cheeses which have received at least one two-sided treatment with a coating composition comprising polymer A only, not only in the temperature range of 0-15 °C, but also in the temperature range of 15-25 °C.

### EXAMPLE

### Raw materials, experimental approach

Mowilith SDM 4230 KL (Celanese, Frankfurt am Main) was employed as a polymer emulsion comprising about 45 wt.% of polymer A. Herein, polymer A is a copolymer of vinyl acetate and dibutyl maleate, which has been obtained by emulsion polymerisation in the presence of poly(vinyl alcohol)

In example 1, Mowilith DN50 (Celanese, Frankfurt am Main) was employed as Polymer B. Mowilith DN50 is a homopolymer of vinyl acetate, which has been obtained by emulsion polymerisation in the presence of poly(vinyl alcohol). The commercially available product is a polymer emulsion comprising about 50 wt.% of polymer, based on dry matter,

In example 2, Mowilith DV50 (Celanese, Frankfurt am Main) was employed as polymer B. This commercially available product is a polymer emulsion comprising about 50 wt.% of polymer, based on dry matter. According to this example, Polymer B is a homopolymer of vinyl acetate, which has been obtained by emulsion polymerisation in the absence of poly(vinyl alcohol), and in the presence of an emulsifier.

The weight ratio of vinyl acetate to dibutyl maleate in copolymer A was determined by ¹H-NMR to be within the range of 60:40 - 55:45. The T_{g} of copolymer A is within the range of 5°-25°C (DSC, dry film). More specifically, the T_{g} of a film formed from Mowilith SDM 4230 may be determined as 18 °C (DIN 53765: DSC, heating rate 20 K/min, film was dried at 23°C and 50% humidity according to DIN EN 23270). The T_{g} of homopolymer B is between 27°-40°C (DSC, dry film) in both examples. More specifically, the T_{g} of a film formed from each of Mowilith DV50 and DN50 may be determined as 32°C and 38°C, respectively (DIN 53765: DSC, heating rate 10 K/min, film was dried at 23°C and 50% humidity according to DIN EN 23270). The measurements of the T_{g} of the films formed from all Mowilith samples were reproducible between duplicates within 1 °C.

Mowilith SDM 4230 KL and Polymer B (i.e. DN50 or DV50) were mixed in various proportions, with the addition of water, to form a coating composition. If necessary, the pH of the coating compositions was adjusted to about 3.5 to about 5 using KOH. The coating compositions obtained were allowed to dry and several properties of the films thus obtained were assessed, in particular with regard to blocking and gloss. The specific methods are outlined below.

### Methods.

Blocking. This film property was assessed according to ASTM D4946-89(2003). On white Leneta charts obtained from Elcometer, a coating composition having a solids content of about 40-45%, based on dry matter, was applied with a 20 mils blade. The film was dried at room temperature during 24 hours. The coated charts thus obtained were stored for 6 days (as in Example 1) or 8 days (as in Example 2) in a chamber maintained at a temperature of 20°C and at a relative humidity of 90 %, corresponding to conditions of heated ripening (or storage). These conditions were applied throughout the entire blocking test. Sections of 4.5 by 4.5 cm were cut out of paper. The cut sections with the coated surfaces were placed face to face. Weights of 1 kg and a diameter of 4 cm were placed on the specimens on a wooden shelve. Shelves and weights had been equilibrated with regard to the experimental temperature of 20°C and relative humidity of 90% during one week. After 30 minutes (as in Example 1) or 60 minutes (as in Example 2), the weights were removed and the specimens were separated by peeling them apart with a slow and steady force at about 180° from each other form a "T" pattern during beginning of the separation. It was necessary to put the specimen next to the ear to hear the degree of tack. Tack was rated on a scale of 0 to 10. In the same manner one can rate blocking resistance on a scale from 0 to 10 according to Table 1.

Gloss. On black and white Leneta or Byko charts a coating composition was applied with a dry solids content of about 40% with a 20 mils blade. The film was dried at a temperature of 13°C and at a relative humidity of 84% during 48 hours. Then the gloss was measured using a micro-TRI-gloss apparatus from Byk Gardner at an angle of 20° on the black area. Gloss was determined as the average of three measurements. Before and after a series of measurements the internal settings of the apparatus were checked. The results are summarised in Tables 2 and 3.

Cutting. The Leneta or Byko charts which were prepared for gloss measurement were taken and put into a refrigerator at a temperature of 5-6°C for at least 24 hours. Then a incision was made using a knife. Visually was observed whether a smooth or brittle cut was obtained. The results are presented under the header "cutting" in Tables 2 and 3.

**Table 1. Blocking scores according to ASTM D4946-89**

| Blocking score | Type of separation | Performance |
|---|---|---|
| 10 | No tack | Perfect |
| 9 | Trace tack | Excellent |
| 8 | Very slight tack | Very good |
| 7 | Very slight to slight tack | Good to very good |
| 6 | Slight tack | Good |
| 5 | Moderate tack | Fair |
| 4 | Very tacky; no seal | Poor to fair |
| 3 | 5-25% seal | Poor |
| 2 | 25 to 50% seal | Poor |
| 1 | 50-75% seal | Very poor |
| 0 | 75-100% seal | Very poor |

**Table 2. Properties of compositions and corresponding film properties of coating compositions according to Example 1.**

| | | | Properties of coating composition | | | Film properties | | |
|---|---|---|---|---|---|---|---|---|
| Composition | Weight ratio of 4230/DN50 | Weight ratio of A/B | Brookfield viscosity (mPa.s)⁽¹⁾ | pH | Solid matter content (wt. %)⁽²⁾ | Blocking score | Gloss | Cutting |
| 4230 | Only 4230 | Only A | 4700 | 4,55 | 39,9 | 0 | 45,0 | Smooth |
| 4230 / DN50 | 98/2 | 97.8/2.2 | 4860 | 4,55 | 40,3 | 0 | 37,0 | Smooth |
| 4230 / DN50 | 95/5 | 94.5/5.5 | 4480 | 4,52 | 40,6 | 5 | 26,0 | Smooth |
| 4230 / DN50 | 90/10 | 89.0/11.0 | 4000 | 4,4 | 40,9 | 4 | 12,0 | Smooth |
| 4230 / DN50 | 85 / 15 | 83.6/16.4 | 3800 | 4,35 | 40,9 | 6 | 7,0 | Smooth |
| 4230 / DN50 | 80/20 | 78.3/21.7 | 3400 | 4,25 | 41,3 | 7 | 4,0 | Brittle |
| 4230 / DN50 | 75/25 | 73.0/27.0 | 3200 | 4,2 | 41,6 | 7 | 3,0 | Brittle |
| DN50 | Only DN50 | Only B | 900 | 3,67 | 45,6 | 9 | 0,1 | Brittle |

| | | | | | | | | |
|---|---|---|---|---|---|---|---|---|
| (1) Brookfield viscosity is determined according to a method based on ISO 2555. The viscosity of the samples was measured at 23°C using a Brookfield viscometer type LVDV-E operated at speed 30 rpm using spindle number 4. The viscosity meter was levelled and the spindle was attached to the apparatus. The spindle was immersed into the sample up to the mark on the spindle. The measurement was started and the result was taken at steady state or after one minute. (2) Solid matter content was determined according to a method based on ISO 1625. Thus, a small amount of a coating composition was weighed onto a flat surface provided by a first culture dish (diameter ± 60 mm), and a surface of a second culture dish was pressed against the surface of the first culture dish, comprising the coating composition. The weights of the two culture disks were known to the nearest mg. A thin film was applied on the two surfaces of the culture dishes by gently moving the touching surfaces in circular or ellipsoidal orbits. The dishes were then separated to expose their coated surfaces to the atmosphere. The dishes were then transferred into an oven which was heated to 105°C, and left at that temperature for one hour. Afterwards, the dishes were transferred into a desiccator and allowed to cool to room temperature. The dishes were weighed with the attached films to the nearest 1 mg, and the solid matter content was calculated from the difference between the mass of the applied wet coating composition and the weight of the dry film. | | | | | | | | |

The results clearly demonstrate the efficacy of polymer B to reduce blocking of a film.

**Table 3. Properties of compositions and corresponding film properties of coating compositions according to Example 2.**

| | | | Properties of coating composition⁽¹⁾ | | | Film Properties⁽¹⁾ | | |
|---|---|---|---|---|---|---|---|---|
| Composition | Weight ratio of 4230/DV50 | Weight ratio of A/B | Brookfield viscosity (mPa.s) | pH | Solid matter content (wt. %) | Blocking score | Gloss | Cutting |
| 4230 | 100/0 | Only A | 4660 | 4,57 | 40 | 3 | 46,8 | Smooth |
| 4230/DV50 | 98/2 | 97.8/2.2 | 4120 | 4,51 | 40,1 | 6 | 44,4 | Smooth |
| 4230/DV50 | 95/5 | 94.5/5.5 | 3900 | 4,52 | 40 | 8 | 45,2 | Smooth |
| 4230/DV50 | 90/10 | 89.0/11.0 | 4700 | 4,41 | 41 | 9 | 36,8 | Smooth |
| 4230/DV50 | 85/15 | 83.6/16.4 | 4460 | 4,36 | 41,2 | 9 | 29,1 | Brittle |
| 4230/DV50 | 80/20 | 78.3/21.7 | 3820 | 4,31 | 41,6 | 9 | 22,8 | Brittle |
| 4230/DV50 | 75/25 | 73.0/27.0 | 2700 | 4,27 | 41,8 | 9 | 16,2 | Brittle |
| DV50 | 0/100 | Only B | 91 | 3,88 | 50 | 9 | 59,6 | Brittle |

| | | | | | | | | |
|---|---|---|---|---|---|---|---|---|
| (1) See Table 2 for definitions. | | | | | | | | |

The results according to Table 3 clearly demonstrate the enhanced gloss of a composition comprising Mowilith DV50, as compared with Mowilith DN50.

## Claims

1. A method for coating a cheese, wherein an aqueous coating composition is applied to a surface of the cheese, said coating composition comprising a mixture of 70-98 parts by weight of a polymer A and 2-30 parts by weight of a polymer B, based on the total weight of the mixture, wherein polymer A has a glass transition temperature T_{g}(A) of 25°C or less and wherein polymer B has a glass transition temperature T_{g}(B) greater than 25°C, and wherein polymer A and polymer B are prepared by polymerization of a monomer or a monomer mixture, wherein the monomer is selected from the group consisting of a vinylic ester of an aliphatic saturated monocarboxylic acid having a chain length of C₁-C₁₈, a diester of an alkanol having a chain length of C₁-C₁₈ and a monoethylenically unsaturated C₂-C₁₂ dicarboxylic acid, an acrylic ester of an alkanol having a chain length of C₁-C₁₈, a methacrylic ester of an alkanol having a chain length of C₁-C₁₈, and an alpha-olefin having a chain length of C₂-C₁₈.

2. The method according to Claim 1, wherein the cheese is dried.

3. The method according to Claim 1 or Claim 2, wherein polymer A and polymer B are prepared by emulsion polymerization.

4. The method according to one of the preceding claims, wherein the monounsaturated C₂-C₁₂ dicarboxylic acid is maleic acid or fumaric acid, or a mixture thereof.

5. The method according to Claim 4, wherein the monomer or monomer mixture further comprises a monoethylenically unsaturated C₂-C₁₂ mono- or dicarboxylic acid or a salt thereof, or a mixture thereof.

6. The method according to Claim 5, wherein the mono-ethylenically unsaturated C₂-C₁₂ mono- or dicarboxylic acid is selected from the group consisting of acrylic acid, methacrylic acid, itaconic acid, fumaric acid, maleic acid, a maleic mono-ester of an alkanol having a chain length of C₁-C₁₈, and a fumaric mono-ester of an alkanol having a chain length of C₁-C₁₈.

7. The method according to one of the preceding claims, wherein A is a copolymer obtainable by polymerization of:
a. 40 to 95 parts by weight of a monomer selected from the group consisting of a vinylic ester of an aliphatic saturated monocarboxylic acid having a chain length of C₁-C₆, an acrylic ester of an alkanol having a chain length of C₁-C₆ and a methacrylic ester of an alkanol having a chain length of C₁-C₆; and
b. 5 to 60 parts by weight of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid and itaconic acid.

8. The method according to any one of the preceding claims, wherein polymer A is a copolymer obtainable by polymerization of:
a. 50 to 70 parts by weight of vinyl acetate, and
b. 30 to 50 parts by weight of dibutylmaleate

9. The method according to any one of the preceding claims, wherein polymer B is obtainable by polymerization of a monomer or a monomer mixture, wherein the monomer is selected from the group consisting of a vinylic ester of an aliphatic saturated monocarboxylic acid having a chain length of C₁-C₆, an acrylic ester of an alkanol having a chain length of C₁-C₆, a methacrylic ester of an alkanol having a chain length of C₁-C₆, a monoethylenically unsaturated C₂-C₁₂ monocarboxylic acid or a salt thereof, and a monoethylenically unsaturated C₂-C₁₂ dicarboxylic acid or a salt thereof.

10. The method according to any one of the preceding claims, wherein polymer B is a homopolymer.

11. The method according to Claim 10, wherein polymer B is obtainable by polymerization of vinyl acetate.

12. The method according to any one of the preceding claims, wherein polymer A and/or polymer B are prepared in the presence 0.1-3 parts by weight, based on the total weight of the monomer or monomer mixture, of a nonionic and/or anionic emulsifier.

13. The method according to any one of the preceding claims, wherein polymer A and/or polymer B are prepared in the presence of 1-12 parts by weight, based on the total weight of the monomer or monomer mixture, of a protective colloid.

14. The method according to any one of the preceding claims, wherein the coating composition is an aqueous coating composition.

15. The method according to any one of the preceding claims, wherein the coating composition comprises:
a. 25-50% (w/w) of polymer A and polymer B;
b. 0.01-5% (w/w) of an additive, based on dry matter; and
c. water to 100% (w/w).

## Patentansprüche

1. Ein Verfahren zum Beschichten eines Käses, wobei eine wässrige Beschichtungszusammensetzung auf eine Oberfläche des Käses aufgebracht wird, wobei die Beschichtungszusammensetzung ein Gemisch von 70-98 Gewichtsteilen eines Polymers A und 2-30 Gewichtsteilen eines Polymers B, bezogen auf das Gesamtgewicht des Gemischs, umfasst, wobei Polymer A eine Glasübergangstemperatur T_{g}(A) von 25°C oder weniger aufweist und wobei Polymer B eine Glasübergangstemperatur T_{g}(B) über 25°C aufweist, und wobei Polymer A und Polymer B durch Polymerisation eines Monomers oder eines Monomergemisches hergestellt werden, wobei das Monomer aus der Gruppe bestehend aus einem Vinylester einer aliphatischen gesättigten Monocarbonsäure mit einer Kettenlänge von C₁-C₁₈, einem Diester eines Alkanols mit einer Kettenlänge von C₁-C₁₈ und einer einfach ethylenisch ungesättigten C₂-C₁₂-Dicarbonsäure, einem Acrylester eines Alkanols mit einer Kettenlänge von C₁-C₁₈, einem Methacrylester eines Alkanols mit einer Kettenlänge von C₁-C₁₈ und einem α-Olefin mit einer Kettenlänge von C₂-C₁₈ ausgewählt ist.

2. Das Verfahren nach Anspruch 1, wobei der Käse getrocknet wird.

3. Das Verfahren nach Anspruch 1 oder Anspruch 2, wobei Polymer A und Polymer B durch Emulsionspolymerisation hergestellt werden.

4. Das Verfahren nach einem der vorhergehenden Ansprüche, wobei die einfach ungesättigte C₂-C₁₂-Dicarbonsäure Maleinsäure oder Fumarsäure oder ein Gemisch davon ist.

5. Das Verfahren nach Anspruch 4, wobei das Monomer oder Monomergemisch weiter eine einfach ethylenisch ungesättigte C₂-C₁₂-Mono- oder Dicarbonsäure oder ein Salz davon, oder ein Gemisch davon, umfasst.

6. Das Verfahren nach Anspruch 5, wobei die einfach ethylenisch ungesättigte C₂-C₁₂-Mono- oder Dicarbonsäure aus der Gruppe bestehend aus Acrylsäure, Methacrylsäure, Itaconsäure, Fumarsäure, Maleinsäure, einem Maleinsäuremonoester eines Alkanols mit einer Kettenlänge von C₁-C₁₈ und einem Fumarsäuremonoester eines Alkanols mit einer Kettenlänge von C₁-C₁₈ ausgewählt ist.

7. Das Verfahren nach einem der vorhergehenden Ansprüche, wobei A ein Copolymer ist, das erhältlich ist durch Polymerisation von:
a. 40 bis 95 Gewichtsteilen eines Monomers, ausgewählt aus der Gruppe bestehend aus einem Vinylester einer aliphatischen gesättigten Monocarbonsäure mit einer Kettenlänge von C₁-C₆, einem Acrylester eines Alkanols mit einer Kettenlänge von C₁-C₆ und einem Methacrylester eines Alkanols mit einer Kettenlänge von C₁-C₆; und
b. 5 bis 60 Gewichtsteilen eines einfach ethylenisch ungesättigten Monomers, ausgewählt aus der Gruppe bestehend aus einem Maleinsäuremono- und/oder -diester eines Alkanols mit einer Kettenlänge von C₁-C₁₈, einem Fumarsäuremono- und/oder -diester eines Alkanols mit einer Kettenlänge von C₁-C₁₈, einem Acrylester eines Alkanols mit einer Kettenlänge von C₁-C₁₈, einem Methacrylester eines Alkanols mit einer Kettenlänge von C₁-C₁₈, einem α-Olefin mit einer Kettenlänge von C₂-C₁₈, Acrylsäure, Methacrylsäure und Itaconsäure.

8. Das Verfahren nach einem der vorhergehenden Ansprüche, wobei Polymer A ein Copolymer ist, das erhältlich ist durch Polymerisation von:
a. 50 bis 70 Gewichtsteilen Vinylacetat und
b. 30 bis 50 Gewichtsteilen Dibutylmaleat.

9. Das Verfahren nach einem der vorhergehenden Ansprüche, wobei Polymer B durch Polymerisation eines Monomers oder Monomergemischs erhältlich ist, wobei das Monomer aus der Gruppe bestehend aus einem Vinylester einer aliphatischen gesättigten Monocarbonsäure mit einer Kettenlänge von C₁-C₆, einem Acrylester eines Alkanols mit einer Kettenlänge von C₁-C₆, einem Methacrylester eines Alkanols mit einer Kettenlänge von C₁-C₆, einer einfach ethylenisch ungesättigten C₂-C₁₂-Monocarbonsäure oder einem Salz davon und einer einfach ethylenisch ungesättigten C₂-C₁₂-Dicarbonsäure oder einem Salz davon ausgewählt ist.

10. Das Verfahren nach einem der vorhergehenden Ansprüche, wobei Polymer B ein Homopolymer ist.

11. Das Verfahren nach Anspruch 10, wobei Polymer B durch Polymerisation von Vinylacetat erhältlich ist.

12. Das Verfahren nach einem der vorhergehenden Ansprüche, wobei Polymer A und/oder Polymer B in Gegenwart von 0,1-3 Gewichtsteilen, bezogen auf das Gesamtgewicht des Monomers oder Monomergemisches, eines nichtionischen und/oder anionischen Emulgators hergestellt werden.

13. Das Verfahren nach einem der vorhergehenden Ansprüche, wobei Polymer A und/oder Polymer B in Gegenwart von 1-12 Gewichtsteilen, bezogen auf das Gesamtgewicht des Monomers oder Monomergemisches, eines Schutzkolloids hergestellt werden.

14. Das Verfahren nach einem der vorhergehenden Ansprüche, wobei die Beschichtungszusammensetzung eine wässrige Beschichtungszusammensetzung ist.

15. Das Verfahren nach einem der vorhergehenden Ansprüche, wobei die Beschichtungszusammensetzung umfasst:
a. 25-50% (Gew./Gew.) Polymer A und Polymer B;
b. 0,01-5% (Gew./Gew.) eines Additivs, bezogen auf die Trockensubstanz; und
c. Wasser auf 100% (Gew./Gew.).

## Revendications

1. Procédé de revêtement d'un fromage, dans lequel une composition de revêtement aqueuse est appliquée sur une surface du fromage, ladite composition de revêtement comprenant un mélange de 70 à 98 parties en poids d'un polymère A et de 2 à 30 parties en poids d'un polymère B, par rapport au poids total du mélange, où le polymère A a une température de transition vitreuse T_{g}(A) de 25 °C ou moins et où le polymère B a une température de transition vitreuse T_{g}(B) supérieure à 25 °C, et où le polymère A et le polymère B sont préparés par polymérisation d'un monomère ou d'un mélange de monomères, où le monomère est choisi dans le groupe consistant en un ester vinylique d'un acide monocarboxylique saturé aliphatique ayant une longueur de chaîne de C₁ à C₁₈, un diester d'un alcanol ayant une longueur de chaîne de C₁ à C₁₈ et un acide dicarboxylique en C₂ à C₁₂ monoéthyléniquement insaturé, un ester acrylique d'un alcanol ayant une longueur de chaîne de C₁ à C₁₈, un ester méthacrylique d'un alcanol ayant une longueur de chaîne en C₁ à C₁₈, et une alpha-oléfine ayant une longueur de chaîne de C₂ à C₁₈.

2. Procédé selon la revendication 1, dans lequel le fromage est séché.

3. Procédé selon la revendication 1 ou la revendication 2 dans lequel le polymère A et le polymère B sont préparés par polymérisation en émulsion.

4. Procédé selon l'une des revendications précédentes, dans lequel l'acide dicarboxylique en C₂ à C₁₂ monoinsaturé est l'acide maléique ou l'acide fumarique, ou l'un de leurs mélanges.

5. Procédé selon la revendication 4, dans lequel le monomère ou mélange de monomères comprend en outre un acide mono- ou di-carboxylique en C₂ à C₁₂ monoéthyléniquement insaturé ou un sel de celui-ci, ou un mélange de ceux-ci.

6. Procédé selon la revendication 5, dans lequel l'acide mono- ou di-carboxylique en C₂ à C₁₂ monoéthyléniquement insaturé est choisi dans le groupe consistant en l'acide acrylique, l'acide méthacrylique, l'acide itaconique, l'acide fumarique, l'acide maléique, un mono-ester maléique d'un alcanol ayant une longueur de chaîne de C₁ à C₁₈, et un mono-ester fumarique d'un alcanol ayant une longueur de chaîne de C₁ à C₁₈.

7. Procédé selon l'une des revendications précédentes, dans lequel A est un copolymère pouvant être obtenu par polymérisation de :
a. 40 à 95 parties en poids d'un monomère choisi dans le groupe consistant en un ester vinylique d'un acide monocarboxylique saturé aliphatique ayant une longueur de chaîne de C₁ à C₆, un ester acrylique d'un alcanol ayant une longueur de chaîne de C₁ à C₆ et un ester méthacrylique d'un alcanol ayant une longueur de chaîne de C₁ à C₆ ; et
b. 5 à 60 parties en poids d'un monomère monoéthyléniquement insaturé choisi dans le groupe consistant en un mono- et/ou di-ester maléique d'un alcanol ayant une longueur de chaîne de C₁ à C₁₈, un mono- et/ou di-ester fumarique d'un alcanol ayant une longueur de chaîne de C₁ à C₁₈, un ester acrylique d'un alcanol ayant une longueur de chaîne de C₁ à C₁₈, un ester méthacrylique d'un alcanol ayant une longueur de chaîne de C₁ à C₁₈, une alpha-oléfine ayant une longueur de chaîne de C₂ à C₁₈, l'acide acrylique, l'acide méthacrylique et l'acide itaconique.

8. Procédé selon l'une quelconque des revendications précédentes, dans lequel le polymère A est un copolymère pouvant être obtenu par polymérisation de:
a. 50 à 70 parties en poids d'acétate de vinyle, et
b. 30 à 50 parties en poids de maléate de dibutyle.

9. Procédé selon l'une quelconque des revendications précédentes, dans lequel le polymère B peut être obtenu par polymérisation d'un monomère ou d'un mélange de monomères, dans lequel le monomère est choisi dans le groupe consistant en un ester vinylique d'un acide monocarboxylique saturé aliphatique ayant une longueur de chaîne de C₁ à C₆, un ester acrylique d'un alcanol ayant une longueur de chaîne de C₁ à C₆, un ester méthacrylique d'un alcanol ayant une longueur de chaîne de C₁ à C₆, un acide monocarboxylique en C₂ à C₁₂ monoéthyléniquement insaturé ou un sel de celui-ci et un acide dicarboxylique en C₂ à C₁₂ monoéthyléniquement insaturé ou un sel de celui-ci.

10. Procédé selon l'une quelconque des revendications précédentes, dans lequel le polymère B est un homopolymère.

11. Procédé selon la revendication 10, dans lequel le polymère B peut être obtenu par polymérisation d'acétate de vinyle.

12. Procédé selon l'une quelconque des revendications précédentes, dans lequel le polymère A et/ou le polymère B sont préparés en présence de 0,1 à 3 parties en poids, par rapport au poids total du monomère ou mélange de monomères, d'un émulsifiant non ionique et/ou anionique.

13. Procédé selon l'une quelconque des revendications précédentes, dans lequel le polymère A et/ou le polymère B sont préparés en présence de 1 à 12 parties en poids, par rapport au poids total du monomère ou mélange de monomères, d'un colloïde protecteur.

14. Procédé selon l'une quelconque des revendications précédentes, dans lequel la composition de revêtement est une composition de revêtement aqueuse.

15. Procédé selon l'une quelconque des revendications précédentes, dans lequel la composition de revêtement comprend :
a. 25 à 50 % (p/p) de polymère A et de polymère B ;
b. 0,01 à 5 % (p/p) d'un additif, par rapport à la matière sèche ; et
c. de l'eau pour atteindre 100 % (p/p).
